# EUROPEAN PATENT SPECIFICATION

(11) **EP 3 421 165 B1**
(45) Date of publication and mention of the grant of the patent: **29.07.2020**
(21) Application number: 18175824.4
(22) Date of filing: 04.06.2018
(51) Int. Cl.: B23K 1/00, B23K 31/02, F01D 5/18, F01D 9/02, F01D 25/08, B23K 26/342, B23K 101/00, B23K 103/18

(54) **METHOD OF CREATING A COOLING ARRANGEMENT OF A TURBINE COMPONENT; TURBINE COMPONENT WITH SUCH COOLING ARRANGEMENT**
VERFAHREN ZUR ERZEUGUNG EINER KÜHLANORDNUNG IN EINER TURBINKOMPONENTE ; TURBINKOMPONENTE MIT EINER SOLCHEN KÜHLANORDNUNG
PROCÉDÉ DE CRÉATION D'UN AGENCEMENT DE REFROIDISSEMENT D'UN COMPOSANT DE TURBINE ; COMPOSANT DE TURBINE AVEC UN TEL AGENCEMENT DE REFROIDISSEMENT

(30) Priority: 13.06.2017 US 201715621394
(43) Date of publication of application: 02.01.2019
(73) Proprietor: General Electric Company, Schenectady, NY 12345 (US)
(72) Inventor: MORGAN, Victor John, Greenville, SC South Carolina 29615 (US); GARCIA-CRESPO, Andres Jose, Greenville, SC South Carolina 29615 (US); BLACK, Elisabeth Kraus, Greenville, SC South Carolina 29615 (US); GERGELY, George Andrew, Greenville, SC South Carolina 49615 (US); REED, Jonathan Glenn, Greenville, SC South Carolina 29615 (US)
(74) Representative: BRP Renaud & Partner mbB Rechtsanwälte Patentanwälte Steuerberater

(56) References cited:
- EP-A1- 2 728 114
- US-A1- 2012 082 565
- US-A1- 2012 121 415
- US-A1- 2012 134 845
- US-A1- 2016 177 782

## Description

### FIELD OF THE INVENTION

The present invention is generally directed to a method of creating a cooling arrangement for a turbine component and a turbine component according to the preamble of claims 1 and 9. More specifically, the present invention is directed to a cooling arrangement in a turbine component and a method of creating a cooling arrangement for a turbine component.

### BACKGROUND OF THE INVENTION

Certain components, such as gas turbine components operate at high temperatures and under harsh conditions. Cooling passages may be formed in gas turbine components to help circulate coolant for extending the service life of these components. However, incorporating cooling passages, such as by casting, is expensive.

Closest prior art US 2012/0082565 describes a turbine rotor blade having a cooling cartridge within a platform slot, for cooling the platform.

US 2006/177782 describes a turbine engine component having a platform with a mateface on a circumferential side thereof, and a core passageway.

US 2012/0134845 describes a blade for a gas turbine engine, having interior cooling channels and an insert for directing cooling gas into the cooling channels.

### BRIEF DESCRIPTION OF THE INVENTION

According to the present invention, a method of creating a cooling arrangement for a turbine component having a surface is defined in claim 1.

According to the present invention, a turbine component having a surface is defined in claim 9.

Other features and advantages of the present invention will be apparent from the following more detailed description of the preferred embodiment, taken in conjunction with the accompanying drawings, which illustrate, by way of example, the principles of the invention.

### BRIEF DESCRIPTION OF THE DRAWINGS

FIG. 1 illustrates a perspective view of a turbine component and an insert in disassembled state according to an exemplary embodiment of the present disclosure.
FIG. 2 illustrates a partial sectional view of taken 2-2 of FIG. 1 in assembled state according to an exemplary embodiment of the present disclosure.
FIG. 3 illustrates a method according to an exemplary embodiment of the present disclosure.

Wherever possible, the same reference numbers will be used throughout the drawings to represent the same parts.

### DETAILED DESCRIPTION OF THE INVENTION

The detailed description set forth below in connection with the appended drawings where like numerals reference like elements is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

Provided are exemplary methods and platform cooling arrangements. Embodiments of the present disclosure, in comparison to methods and platform cooling arrangements not utilizing one or more features disclosed herein, enable lower cost, increased heat transfer coefficients, higher engine performance and less cooling flow by allowing more complicated interior geometries.

All numbers expressing quantities of ingredients and/or reaction conditions are to be understood as being modified in all instances by the term "about", unless otherwise indicated.

All percentages and ratios are calculated by weight unless otherwise indicated. All percentages are calculated based on the total weight of a composition unless otherwise indicated. All component or composition levels are in reference to the active level of that component or composition, and are exclusive of impurities, for example, residual solvents or by-products, which may be present in commercially available sources.

The articles "a" and "an," as used herein, mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used. The adjective "any" means one, some, or all indiscriminately of whatever quantity.

The term "at least one," as used herein, means one or more and thus includes individual components as well as mixtures/combinations.

The term "comprising" (and its grammatical variations), as used herein, is used in the inclusive sense of "having" or "including" and not in the exclusive sense of "consisting only of."

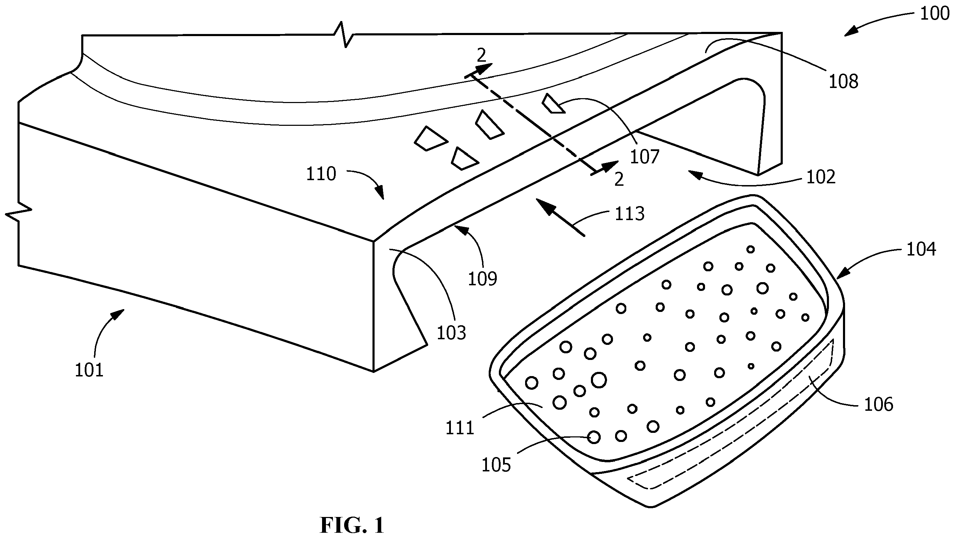

With reference to FIG. 1, a cooling arrangement 100 in a turbine component 101 having a surface in dissembled state is provided. Turbine component 101 includes an interior cooling passage (not shown) formed therein. Turbine component 101 further includes a hot side 110 and a cold side 109. Cooling arrangement 100 comprises a slot 102 formed through a sidewall 103 of turbine component 101. Cooling arrangement 100 further comprises a recessed insert 104 secured within slot 102. Insert 104 includes one or more cooling features 105 on an impingement surface 111, and a cavity 106 (pre-impingement). The cooling arrangement 100 further comprises at least one passage 107 in fluid communication with the internal cooling passage (not shown), insert 104, and an exterior surface 108 of turbine component 101. Recessed insert 104 is capable of sliding into slot 102 of turbine component 101 in a direction 113.

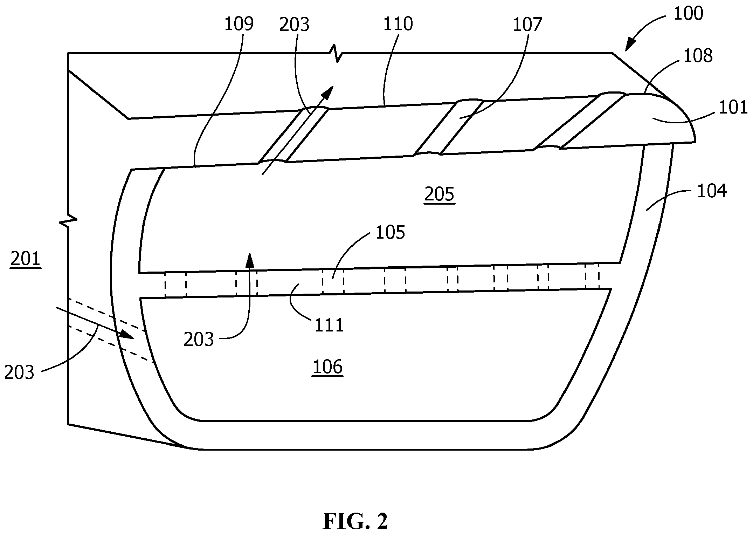

With reference to FIG. 2, a partial sectional view of taken 2-2 of FIG. 1 in assembled state is provided. Insert 104 is secured to slot 102 of turbine 101. The outer contour of insert 104 is continuously and smoothly jointed to sidewall 103 of turbine component 101 so that an aerodynamic profile is maintained. Coolant gas path 203 flows from an internal cooling passage 201 through a high-pressure connector 202 into cavity 106 (pre-impingement). Coolant gas path 203 then impinges through one or more cooling features 105 of impingement surface 111 into another post-impingement cavity 205 formed between impingement surface 111 and cold side 109 comprising an inner surface when assembled as shown. When disassembled, cavity 205 may not exist. In one embodiment, cooling features 105 may include, but not be limited to, one or more impingement hole. In one embodiment, cooling features 105 are distributed uniformly on impingement surface 111. In another embodiment, cooling features 105 are distributed not uniformly on impingement surface 111. Coolant gas path 203 then flows outside cavity 205 through at least one passage 107. In one embodiment, passage 107 is aligned to induce maximized cooling effects. In one embodiment, coolant gas path 203 forms a cooling stream and/or film on the surface of turbine component 101, thereby protecting turbine component 101 from high temperature environments.

In one embodiment, sidewall 103 is a sidewall other than a slashface. In another embodiment, sidewall 103 is a slashface. In another embodiment, sidewall 103 is both a sidewall and a slashface.

In one embodiment, turbine component 101 includes more than one slot 102 to which more than one insert 104 is inserted or secured.

In one embodiment, pressure connector 202 is also directly connected to cavity 205 when assembled. In another embodiment, pressure connector 202 is connected to either cavity 205 or cavity 206 when assembled.

In one embodiment, insert 104 comprises a material including, but not limited to, a nickel based superalloy, a cobalt based superalloy, a titanium based super alloy, and combinations thereof. A person skilled in the art will appreciate other materials for insert 104.

In one embodiment, insert 104 is the same material as turbine component 101. In another embodiment, insert 104 is not the same material as turbine component 101.

In one embodiment, insert 104 is arranged and disposed to provide impingement cooling on inner surface 112 of slot 102.

In one embodiment, turbine component 101 includes, but not limited to, nozzle, blade, shroud, combustor liner, and combinations thereof. A person skilled in the art will appreciate other turbine components.

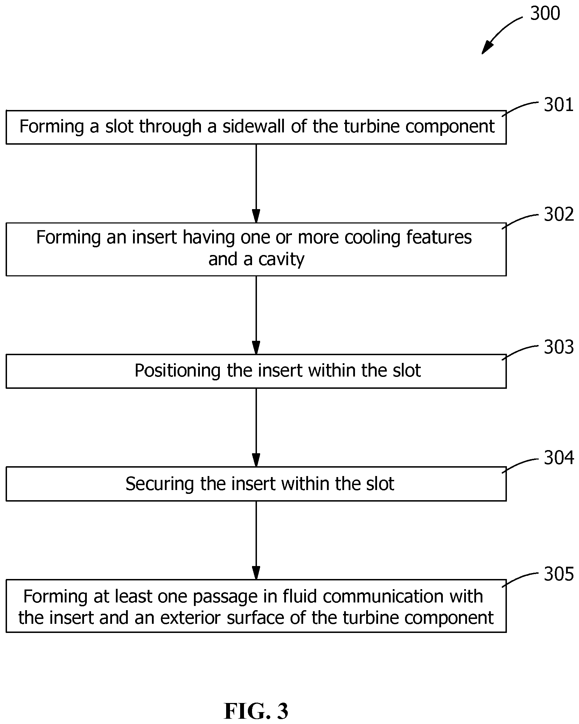

With reference to FIG. 3, a method 300 of creating a cooling arrangement 100 for a turbine component 101 having a surface is provided. Turbine component 101 includes an interior cooling passage 201 formed therein. Method 300 comprises a step of forming a slot 102 through a sidewall 103 of turbine component 101 (step 301). Method 300 further comprises a step of forming an insert 104 having one or more cooling features 105 and a cavity 106 (step 302). Method 300 further comprises a step of positioning insert 104 within slot 102 (step 303). Method 300 further comprises a step of securing insert 104 within slot 102 (step 304). Method 300 further comprises a step of forming at least one passage 107 in fluid communication with internal cooling passage 201, insert 104, and an exterior surface of turbine component 101(step 305).

In one embodiment, insert 104 is formed via an additive manufacturing process including direct metal laser melting (DMLM), direct metal laser sintering (DMLS), casting, 3D printing, fabrication, and combinations thereof. A person skilled in the art will appreciate other additive manufacturing process.

In one embodiment, insert 104 is secured to sidewall 103 via a process selected from the group consisting of mechanical joining, welding, and combinations thereof.

While the invention has been described with reference to a preferred embodiment, it will be understood by those skilled in the art that various changes may be made and equivalents may be substituted for elements thereof without departing from the scope of the invention. Therefore, it is intended that the invention not be limited to the particular embodiment disclosed as the best mode contemplated for carrying out this invention, but that the invention will include all embodiments falling within the scope of the appended claims.

## Claims

1. A method (300) of creating a cooling arrangement (100) for a turbine component (101) having a surface, wherein the turbine component (101) includes an interior cooling passage (201) formed therein, the method (300) comprising steps of:
forming a slot (102) through a side wall (103) having an exterior surface (108) and an inner surface of the turbine component (101);
forming an insert (104) having an impingement surface (111) comprising one or more cooling features (105), the impingement surface (111) defining within the insert (104) a pre-impingement cavity (106);
and being **characterised by** the following steps :
positioning the insert (104) within the slot (102), such that the impingement surface (111) defines with the inner surface of the side wall (103) a post-impingement cavity (205) that is radially offset from the pre-impingement cavity (106) and in fluid communication with the pre-impingement cavity (106) via the one or more cooling features (105);
securing the insert (104) within the slot (102); and
forming at least one passage (107) in the side wall (103) of the turbine component (101), and in fluid communication with the internal cooling passage (201), the pre-impingement cavity (106), the post-impingement cavity (205), and the exterior surface (108) of the side wall (103) of the turbine component (101).

2. The method (300) of claim 1, wherein the side wall (103) is a side wall other than a slashface.

3. The method (300) of claim 1 or 2, wherein the step of forming the insert (104) comprises an additive manufacturing process selected from the group consisting of direct metal laser melting, direct metal laser sintering, casting, 3D printing, fabrication, and combinations thereof.

4. The method (300) of claim 1,2 or 3, wherein the step of securing the insert (104) within the slot (102) comprises a process selected from the group consisting of mechanical joining, brazing, welding, and combinations thereof.

5. The method (300) of any preceding claim, wherein the insert (104) comprises a metal selected from a nickel based superalloy, a cobalt based superalloy, a titanium based super alloy, and combinations thereof.

6. The method (300) of any preceding claim, wherein the insert (104) is arranged and disposed to provide impingement cooling on the inner surface of the slot (102).

7. The method (300) of claim 6, wherein the insert (104) is in fluid communication with the exterior surface (108) of the turbine component (101) through the at least one passage (107).

8. The method (300) of any preceding claim, wherein the turbine component (101) is selected from the group consisting of nozzle, blade, shroud, combustor liner, and combinations thereof.

9. A turbine component (101) having a surface and comprising a cooling arrangement (100), wherein the turbine component (101) includes an interior cooling passage (201) formed therein, the cooling arrangement (100) comprising:
a slot (102) formed through a sidewall (103) having an exterior surface (108) and an inner surface of the turbine component (101);
an insert (104) secured within the slot (102), the insert (104) having an impingement surface (111) comprising one or more cooling features (105), the impingement surface (111) defining within the insert (104) a pre-impingement cavity (106), and being **characterised in that** the impingement surface (111) defines with the inner surface of the side wall (103) a post-impingement cavity (205) that is radially offset from the pre-impingement cavity (106) and in fluid communication with the pre-impingement cavity (106) via the one or more cooling features (105);
and by :
at least one passage (107) formed in the side wall (103) of the turbine component (101) in fluid communication with the internal cooling passage (201), the pre-impingement cavity (106), the post-impingement cavity (205), and the exterior surface (108) of the side wall (103) of the turbine component (101).

10. The turbine component (101) of claim 9, wherein the side wall (103) is a side wall other than a slashface.

11. The turbine component (101) of claim 9 or 10, wherein the insert (104) is arranged and disposed to provide impingement cooling on an inner surface (112) of the slot (102).

12. The turbine component (101) of any one of claims 9 to 11, wherein insert (104) is in fluid communication with the exterior surface (108) of the turbine component (101) through the at least one passage (107).

13. The turbine component (101) of any of claims 9 to 12, wherein the turbine component (101) is selected from the group consisting of nozzle, blade, shroud, combustor liner, and combinations thereof.

## Patentansprüche

1. Verfahren (300) zur Erzeugung einer Kühlanordnung (100) für eine Turbinenkomponente (101), mit einer Oberfläche, wobei die Turbinenkomponente (101) einen darin ausgebildeten inneren Kühlkanal (201) einschließt, wobei das Verfahren (300) folgende Schritte umfasst:
Ausbilden eines Schlitzes (102) durch eine Seitenwand (103) mit einer Außenoberfläche (108) und einer Innenoberfläche der Turbinenkomponente (101);
Ausbilden eines Einsatzes (104) mit einer Aufprallfläche (111), umfassend ein oder mehrere Kühlmerkmale (105), wobei die Aufprallfläche (111) innerhalb des Einsatzes (104) einen Voraufprallhohlraum (106) definiert;
und **gekennzeichnet ist durch** die folgenden Schritte:
Positionieren des Einsatzes (104) innerhalb des Schlitzes (102), sodass die Aufprallfläche (111) mit der Innenoberfläche der Seitenwand (103) einen Nachaufprallhohlraum (205) definiert, der von dem Voraufprallhohlraum (106) radial versetzt ist und mit dem Voraufprallhohlraum (106) über das eine oder die mehreren Kühlmerkmale (105) in Fluidverbindung steht;
Sichern des Einsatzes (104) innerhalb des Schlitzes (102); und
Ausbilden mindestens eines Durchgangs (107) in der Seitenwand (103) der Turbinenkomponente (101) und in Fluidverbindung mit dem inneren Kühlkanal (201), dem Voraufprallhohlraum (106), dem Nachaufprallhohlraum (205) und der Außenoberfläche (108) der Seitenwand (103) der Turbinenkomponente (101).

2. Verfahren (300) nach Anspruch 1, wobei die Seitenwand (103) eine andere Seitenwand als eine Schrägfläche ist.

3. Verfahren (300) nach Anspruch 1 oder 2, wobei der Schritt des Ausbildens des Einsatzes (104) einen additiven Herstellungsprozess umfasst, der ausgewählt ist aus der Gruppe bestehend aus direktem Metall-Laserschmelzen, direktem Metall-Lasersintern, Gießen, 3D-Druck, Fertigung und Kombinationen davon.

4. Verfahren (300) nach Anspruch 1, 2 oder 3, wobei der Schritt des Sicherns des Einsatzes (104) innerhalb des Schlitzes (102) einen Prozess umfasst, der ausgewählt ist aus der Gruppe bestehend aus mechanischem Fügen, Hartlöten, Schweißen und Kombinationen davon.

5. Verfahren (300) nach einem der vorstehenden Ansprüche, wobei der Einsatz (104) ein Metall umfasst, das aus einer Superlegierung auf Nickelbasis, einer Superlegierung auf Kobaltbasis, einer Superlegierung auf Titanbasis und Kombinationen davon ausgewählt ist.

6. Verfahren (300) nach einem der vorstehenden Ansprüche, wobei der Einsatz (104) so angeordnet und positioniert ist, dass eine Prallkühlung an der Innenoberfläche des Schlitzes (102) bereitgestellt wird.

7. Verfahren (300) nach Anspruch 6, wobei der Einsatz (104) durch den mindestens einen Durchgang (107) in Fluidverbindung mit der Außenoberfläche (108) der Turbinenkomponente (101) steht.

8. Verfahren (300) nach einem der vorstehenden Ansprüche, wobei die Turbinenkomponente (101) ausgewählt ist aus der Gruppe bestehend aus Düse, Schaufel, Ummantelung, Brennkammerauskleidung und Kombinationen davon.

9. Turbinenkomponente (101) mit einer Oberfläche und umfassend eine Kühlanordnung (100), wobei die Turbinenkomponente (101) einen darin ausgebildeten inneren Kühlkanal (201) einschließt, wobei die Kühlanordnung (100) Folgendes umfasst:
einen Schlitz (102), der durch eine Seitenwand (103) mit einer Außenoberfläche (108) und einer Innenoberfläche der Turbinenkomponente (101) ausgebildet ist;
einen Einsatz (104), der in dem Schlitz (102) gesichert ist, wobei der Einsatz (104) eine Aufprallfläche (111) mit einem oder mehreren Kühlmerkmalen (105) aufweist, wobei die Aufprallfläche (111) innerhalb des Einsatzes (104) einen Voraufprallhohlraum (106) definiert, und **dadurch gekennzeichnet, dass** die Aufprallfläche (111) mit der Innenoberfläche der Seitenwand (103) einen Nachaufprallhohlraum (205) definiert, der radial von dem Voraufprallhohlraum (106) versetzt ist und über ein oder mehrere Kühlmerkmale (105) in Fluidverbindung mit dem Voraufprallhohlraum (106) steht;
und durch:
mindestens einen Durchgang (107), der in der Seitenwand (103) der Turbinenkomponente (101) in Fluidverbindung mit dem inneren Kühlkanal (201), dem Voraufprallhohlraum (106), dem Nachaufprallhohlraum (205) und der Außenoberfläche (108) der Seitenwand (103) der Turbinenkomponente (101) ausgebildet ist.

10. Turbinenkomponente (101) nach Anspruch 9, wobei die Seitenwand (103) eine andere Seitenwand als eine Schrägfläche ist.

11. Turbinenkomponente (101) nach Anspruch 9 oder 10, wobei der Einsatz (104) so angeordnet und positioniert ist, dass die Prallkühlung an der Innenoberfläche (112) des Schlitzes (102) bereitgestellt wird.

12. Turbinenkomponente (101) nach einem der Ansprüche 9 bis 11, wobei der Einsatz (104) durch den mindestens einen Durchgang (107) in Fluidverbindung mit der Außenoberfläche (108) der Turbinenkomponente (101) steht.

13. Turbinenkomponente (101) nach einem der Ansprüche 9 bis 12, wobei die Turbinenkomponente (101) ausgewählt ist aus der Gruppe bestehend aus Düse, Schaufel, Ummantelung, Brennkammerauskleidung und Kombinationen davon.

## Revendications

1. Procédé (300) de création d'un agencement de refroidissement (100) pour un composant de turbine (101) ayant une surface, dans lequel le composant de turbine (101) inclut un passage de refroidissement intérieur (201) formé à l'intérieur, le procédé (300) comprenant les étapes consistant à :
former une fente (102) à travers une paroi latérale (103) ayant une surface extérieure (108) et une surface intérieure du composant de turbine (101) ;
former un insert (104) ayant une surface d'impact (111) comprenant une ou plusieurs caractéristiques de refroidissement (105), la surface d'impact (111) définissant à l'intérieur de l'insert (104) une cavité de pré-impact (106) ;
et étant **caractérisé par** les étapes suivantes :
positionner l'insert (104) à l'intérieur de la fente (102), de telle sorte que la surface d'impact (111) définit avec la surface intérieure de la paroi latérale (103) une cavité de post-impact (205) qui est radialement décalée de la cavité de pré-impact (106) et en communication fluidique avec la cavité de pré-impact (106) par le biais de l'une ou plusieurs caractéristiques de refroidissement (105) ;
fixer l'insert (104) à l'intérieur de la fente (102) ; et
former au moins un passage (107) dans la paroi latérale (103) du composant de turbine (101), et en communication fluidique avec le passage de refroidissement interne (201), la cavité de pré-impact (106), la cavité de post-impact (205), et la surface extérieure (108) de la paroi latérale (103) du composant de turbine (101).

2. Procédé (300) selon la revendication 1, dans lequel la paroi latérale (103) est une paroi latérale autre qu'une face abrupte.

3. Procédé (300) selon la revendication 1 ou 2, dans lequel l'étape de formation de l'insert (104) comprend un procédé de fabrication d'additif choisi parmi le groupe constitué par la fusion laser directe du métal, le frittage laser direct de métal, la coulée, l'impression 3D, la fabrication, et des combinaisons de ceux-ci.

4. Procédé (300) selon la revendication 1, 2 ou 3, dans lequel l'étape de fixation de l'insert (104) à l'intérieur de la fente (102) comprend un procédé choisi parmi le groupe constitué par la jonction mécanique, le brasage, le soudage, et des combinaisons de ceux-ci

5. Procédé (300) selon une quelconque revendication précédente, dans lequel l'insert (104) comprend un métal choisi parmi un superalliage à base de nickel, un superalliage à base de cobalt, un super alliage à base de titane, et des combinaisons de ceux-ci.

6. Procédé (300) selon une quelconque revendication précédente, dans lequel l'insert (104) est agencé et disposé pour fournir un refroidissement par impact sur la surface intérieure de la fente (102).

7. Procédé (300) selon la revendication 6, dans lequel l'insert (104) est en communication fluidique avec la surface extérieure (108) du composant de turbine (101) à travers l'au moins un passage (107).

8. Procédé (300) selon une quelconque revendication précédente, dans lequel le composant de turbine (101) est choisi parmi le groupe constitué par la buse, la lame, le carénage, la chemise de chambre de combustion, et des combinaisons de ceux-ci.

9. Composant de turbine (101) ayant une surface et comprenant un agencement de refroidissement (100), dans lequel le composant de turbine (101) inclut un passage de refroidissement intérieur (201) formé à l'intérieur, l'agencement de refroidissement (100) comprenant :
une fente (102) formée à travers une paroi latérale (103) ayant une surface extérieure (108) et une surface intérieure du composant de turbine (101) ;
un insert (104) fixé à l'intérieur de la fente (102), l'insert (104) ayant une surface d'impact (111) comprenant une ou plusieurs caractéristiques de refroidissement (105), la surface d'impact (111) définissant à l'intérieur de l'insert (104) une cavité de pré-impact (106), et étant **caractérisé en ce que** la surface d'impact (111) définit avec la surface intérieure de la paroi latérale (103) une cavité de post-impact (205) qui radialement décalée de la cavité de pré-impact (106) et en communication fluidique avec la cavité de pré-impact (106) par le biais de l'une ou plusieurs caractéristiques de refroidissement (105) ;
et **en ce que** :
au moins un passage (107) formé dans la paroi latérale (103) du composant de turbine (101) en communication fluidique avec le passage de refroidissement interne (201), la cavité de pré-impact (106), la cavité de post-impact (205), et la surface extérieure (108) de la paroi latérale (103) du composant de turbine (101).

10. Composant de turbine (101) selon la revendication 9, dans lequel la paroi latérale (103) est une paroi latérale autre qu'une face abrupte.

11. Composant de turbine (101) selon la revendication 9 ou 10, dans lequel l'insert (104) est agencé et disposé pour fournir un refroidissement par impact sur une surface intérieure (112) de la fente (102).

12. Composant de turbine (101) selon l'une quelconque des revendications 9 à 11, dans lequel l'insert (104) est en communication fluidique avec la surface extérieure (108) du composant de turbine (101) à travers l'au moins un passage (107).

13. Composant de turbine (101) selon l'une quelconque des revendications 9 à 12, dans lequel le composant de turbine (101) est choisi parmi le groupe constitué par la buse, la lame, le carénage, la chemise de chambre de combustion, et des combinaisons de ceux-ci.
